# EUROPEAN PATENT SPECIFICATION

(11) **EP 0 648 946 B1**
(45) Date of publication and mention of the grant of the patent: **14.01.1998**
(21) Application number: 94307529.1
(22) Date of filing: 13.10.1994
(51) Int. Cl.: F16C 1/22

(54) **Cable control of the Bowden type**
Bowdenzug
Câble de commande du type Bowden

(30) Priority: 15.10.1993 GB 9321287
(43) Date of publication of application: 19.04.1995
(73) Proprietor: ADWEST BOWDEN TSK LIMITED, South Wales SA14 9TF (GB)
(72) Inventor: Robinson, Michael, Loughor, West Glamorgan, SA4 6GL (GB)
(74) Representative: Livsey, Gilbert Charlesworth Norris

(56) References cited:
- EP-A- 0 234 814
- DE-A- 3 500 734
- US-A- 4 854 185
- US-A- 5 222 411

## Description

This invention relates to a cable control of the Bowden type.

Such a Bowden type cable control comprising an inner core cable moving co-axially within an outer conduit has been known for very many years. They have been employed in a variety of applications, for example in an automobile, to control the fuel/air supply or to control the gearbox, the brakes or the clutch. And it is well known that such controls need means whereby adjustment may be made, for example to compensate for wear of a clutch plate or a brake pad.

Such a Bowden-type of cable control has a substantially inextensible inner core cable interconnecting a master lever with a slave lever. This inner core cable is usually pulled against a spring force. The master lever may be for example, a driver's foot pedal and a slave lever may be for example, a clutch release lever and one of the advantageous features of a Bowden type cable control is that it enables the cable to follow an indirect or even tortuous path between the master and slave levers.

In order to enable the inner core cable to function when it follows an indirect path between the master lever and the slave lever, the substantially inextensible inner core cable is movable coaxially within an outer conduit which is longitudinally compressed between two end abutments, one fixed near the master lever and the other fixed near the slave lever, when the inner core cable is placed under tension. The outer conduit is constituted essentially in the form of an elongate tubular member which coaxially surrounds the inner core cable over a major part of its length. The outer conduit, while being flexible, is constructed and arranged so that it is capable of sustaining the force imposed by such tension of the core cable without significant reduction in its length. Various constructions of such outer conduit are well known in the art.

It is well known also (DE-A-3 500 734) that such Bowden-type cable controls can be adjusted by altering the effective operating length either of the inner core cable or of the outer conduit. For example, a shortening of the effective length of the inner core cable has a similar effect to a corresponding increase of the effective length of the outer conduit; and per contra, the lengthening of the effective length of the inner core cable has a similar effect to a corresponding decrease of the effective length of the outer conduit.

The present invention relates in particular to a device whereby the effective length of the outer conduit of a Bowden-type cable control can be changed and adjusted, and which can be locked and secured, and maintained in a condition to which it has been adjusted. The present invention aims to provide an adjustment device which is robust, efficient and economical to manufacture with no sacrifice of reliability.

Broadly stated, this invention provides a Bowden-type cable control having an inner core cable movable axially within an outer conduit, the outer conduit being adapted to extend between two fixed end abutments, and the control having a device whereby the effective length of the outer conduit as it extends between said end abutments may be adjusted, and wherein the adjuster device essentially comprises an externally threaded hollow stem which can be screwed into and out of a hollow internally threaded sleeve, said stem and said sleeve forming part of the length of said conduit extending between said end abutments, and the core cable passing through and being movable within both said sleeve and said stem, the screwing of the stem into or out of the sleeve being effective to alter the length of the conduit; and wherein the external thread of the stem is formed with at least one flat extending axially along the external surface of the threaded part of the stem, and wherein a latching member is non-rotably connected to the sleeve, the latching member being movable into and out of a position in which it engages the flattened portion of the threaded stem in such a way as to lock the stem against rotation relative to the sleeve.

When the latch is moved out of its locking position engaging the flattened portion of the stem, the stem can be rotated relative to the sleeve, in or out, to adjust the effective length of the conduit.

Where the adjuster device according to the invention is located mid cable, that is between two lengths or sections of the outer conduit as it extends between the two end abutments, the sleeve may be connected, and preferably non-rotatably secured, to one length or section of said conduit and the stem may be rotatably secured to the second conduit length or section. This is a preferred arrangement since it will enable the adjuster device to be located at a location where it is readily accessible to enable adjustment to be performed.

Alternatively, where the adjuster device is provided at one end of the conduit of the Bowden-type cable control, the sleeve may be connected, and preferably non-rotatably secured, to one of the end abutments and the stem may be rotatably connected to the conduit at one end thereof.

The stem and the sleeve with its integral latch are plastics mouldings. Such moulding may have end fittings which can receive, or be swaged or otherwise fixed to, the ends of outer conduit sections of the Bowden-type control cable or to one of the end abutments as the case may be. Although they are preferably of plastics material and are formed integrally with the stem and the sleeve, these end fittings may be of metal and separate.

The latch may be connected to the sleeve by an integral strip constituting a bending hinge.

The threaded part of the stem is preferably arranged to be foursquare in cross-section, with four flats each running axially along its threaded portion; and when embracing the stem, the latch lockably engages three of the four flats being a press fit and clipping over the threaded part of the stem.

By way of example, one embodiment of the invention is illustrated in and will be described with reference to the accompanying drawing. In the drawing:

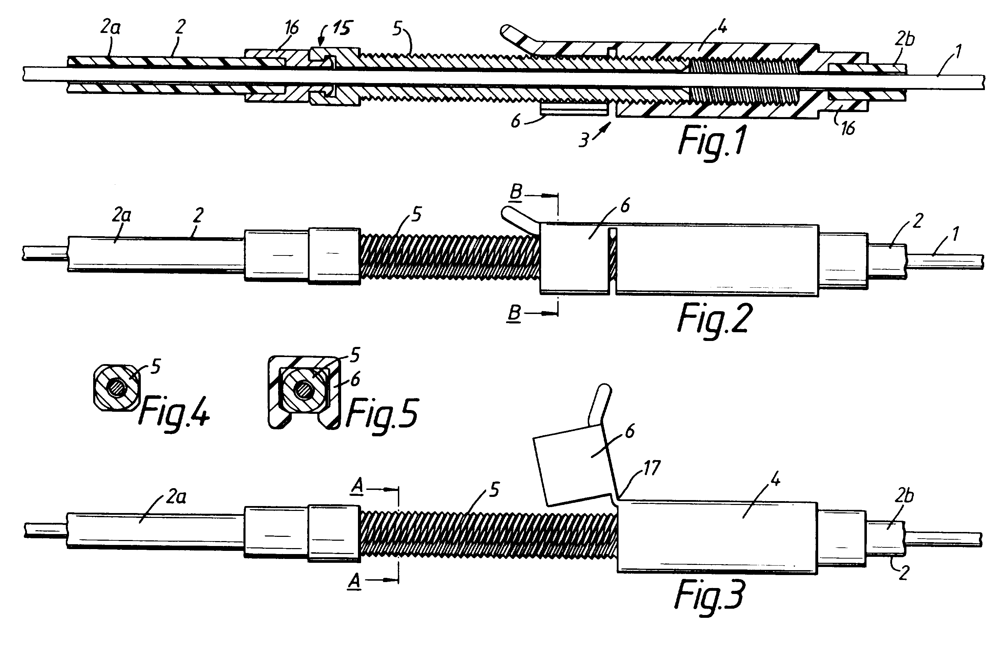

Figure 1 is a cross-sectional side view of the adjusting device for varying the length of the outer conduit of a Bowden-type control cable.

Figures 2 and 3 are side views of the device illustrating the operation of the latch.

Figures 4 and 5 are cross-sectional views taken on the lines A-A of Figure 3 and B-B of Figure 2.

In the drawings 1 represents a core cable of a Bowden-type cable control, the core cable 1 running axially within an outer conduit 2.

In such a Bowden-type of cable control, the core cable 1 is substantially inextensible and will interconnect a master lever with a slave lever. This inner core cable is usually pulled against a spring force. The master lever may be for example, a driver's foot pedal and a slave lever may be for example, a clutch release lever and one of the advantageous features of a Bowden type cable control is that it enables the cable to follow an indirect or even tortuous path between the master and slave levers.

In order to enable the core cable 1 to function when it follows an indirect path between the master lever and the slave lever, the substantially inextensible inner core cable is movable coaxially within the outer conduit 2 which will be longitudinally compressed between two end abutments (not shown), one fixed near the master lever and the other fixed near the slave lever, when the inner core cable 1 is placed under tension. The outer conduit 2 is constituted essentially in the form of an elongate tubular member which coaxially surrounds the core cable 1 over a major part of its length. The outer conduit 2, while being flexible, is constructed and arranged so that it is capable of sustaining the force imposed by such tension of the core cable 1 without significant reduction in its length. Various constructions of such outer conduit are well known in the art.

In the embodiment of the invention illustrated by way of example in the drawing, an adjuster device, generally designated 3, is connected between two conduit sections 2a and 2b.

The adjuster device 3 essentially comprises a hollow internally threaded sleeve 4 which is non-rotatably connected to one conduit section 2b, into and out of which is screwable an externally screw-threaded hollow stem 5 which is rotatably secured by means of a swivel joint 15, to the other conduit section 2a. The screwing of the stem 5 into or out of the sleeve 4 is effective to alter the distance between the two conduit sections, and hence to alter the effective length of the conduit 2 of which they form a part.

As will be seen in Figures 4 and 5, the external thread of the stem 5 is formed with at least one flat extending axially along the external surface of the threaded part of the stem, and non-rotably connected to the sleeve is a latching member 6 which is movable into and out of a position in which it engages the flattened portion of the threaded stem 5 in such a way as to lock the stem against rotation. When the latch member 6 is moved out of its locking position engaging the flattened portion of the stem, the stem can be rotated to adjust the effective spacing between the two conduit sections.

The stem 5 and the sleeve 4 both surround the core cable 1 of the Bowden-type control, the core cable being freely movable within the stem and the sleeve.

The stem and the sleeve with its integral latch are plastics mouldings each with end fittings 16 which can receive, or be swaged or otherwise fixed to, the ends of outer conduit sections 2a and 2b of the Bowden-type control cable. The latch member 6 is connected to the sleeve by an integral strip 17 constituting a bending hinge.

As will be seen best from Figures 4 and 5, the threaded part of the stem 5 is preferably arranged to be foursquare in cross-section, with four flats each running axially along its threaded portion and when engaging the stem, the latch 6 embraces the stem and lockably engages three of the four flats being a press fit and clipping over the threaded part of the stem.

In the embodiment of the invention illustrated by way of example in the drawings, the adjuster device 3 is shown located mid cable, that is between two lengths or sections 2a and 2b of the outer conduit 2 as it extends between its two end abutments (not shown). In this embodiment, the sleeve 4 is non-rotatably secured, to one length or section 2b of said conduit and the stem 5 is rotatably secured to the second conduit length or section 2a. This is a preferred arrangement since it will enable the adjuster device to be located at a location where it is readily accessible to enable adjustment to be performed.

Alternatively, where the adjuster device is provided at one end of the conduit of the Bowden-type cable control, the sleeve 4 may be connected, and preferably non-rotatably secured, to one of the end abutments and the stem 5 may be rotatably connected to the conduit at one end thereof.

## Claims

1. A Bowden-type cable control having an inner core cable (1) movable axially within an outer conduit (2), the outer conduit being adapted to extend between two fixed end abutments, and the control having an adjuster device (3) whereby the effective length of the outer conduit as it extends between said end abutments may be adjusted, and wherein the adjuster device essentially comprises an externally threaded hollow stem (5) which can be screwed into and out of a hollow internally threaded sleeve (4), said stem and said sleeve forming part of the length of said conduit extending between said end abutments, and the core cable passing through and being movable within both said sleeve and said stem, the screwing of the stem (5) into or out of the sleeve (4) being effective to alter the length of the conduit (2); characterised in that the external thread of the stem (5) is formed with at least one flat extending axially along the external surface of the threaded part of the stem, and wherein a latching member (6) is non-rotatably connected to the sleeve (4), the latching member being movable into and out of a position in which it engages the flattened portion of the threaded stem in such a way as to lock the stem against rotation relative to the sleeve.

2. A control according to claim 1 and in which when the latch (6) is moved out of its locking position engaging the flattened portion of the stem (5), the stem can be rotated relative to the sleeve (4), in or out, to adjust the effective length of the conduit (2).

3. A control according to either of claims 1 or 2 and wherein the adjuster device (3) is located mid cable, that is between two lengths or sections (2a and 2b) of the outer conduit as it extends between the two end abutments.

4. A control according to claim 3 and wherein the sleeve (4) is connected, and non-rotatably secured, to one length or section (2b) of said conduit and the stem (5) is rotatably secured by a swivel joint (15) to the second conduit length or section (2a).

5. A control according to claim 1, and wherein the adjuster device is provided at one end of the conduit of the Bowden-type cable control, the sleeve being connected, and non-rotatably secured, to one of the end abutments, and the stem being rotatably connected to the conduit at one end thereof.

6. A control according to any one of the preceding claims and wherein the stem (5) and the sleeve (4) with its integral latch (6) are plastics mouldings.

7. A control according to claim 6 and wherein such mouldings have end fittings which can receive, or be swaged or otherwise fixed to, the ends of outer conduit sections of the Bowden-type control cable.

8. A control according to any one of the preceding claims and wherein the latch (6) is connected to the sleeve (4) by an integral strip (17) constituting a bending hinge.

9. A control according to any one of the preceding claims and wherein the threaded part of the stem (5) is foursquare in cross-section, with four flats each running axially along its threaded portion; and when embracing the stem, the latch (6) lockably engages three of the four flats being a press fit and clipping over the threaded part of the stem (5).

## Patentansprüche

1. Bowdenzug mit einem inneren Kernkabel (1), das axial innerhalb einer äußeren Rohrleitung (2) bewegbar ist, wobei die äußere Rohrleitung so ausgebildet ist, daß sie sich zwischen zwei festen End-Widerlagern erstreckt, und mit einer Einstellvorrichtung (3), durch welche die effektive Länge der äußeren Rohrleitung, wenn sie sich zwischen den besagten End-Widerlagern erstreckt, eingestellt werden kann und bei dem die Einstellvorrichtung im wesentlichen einen mit einem Außengewinde versehenen hohlen Stab (5) aufweist, der in eine hohle, mit einem Innengewinde versehene Hülse (4) ein- und aus ihr herausgeschraubt werden kann, wobei der besagte Stab und die besagte Hülse einen Teil der Länge der sich zwischen den besagten End-Widerlagern erstreckenden besagten Rohrleitung bilden und das Kernkabel sowohl durch die besagte Hülse als auch den besagten Stab hindurchgeführt und in ihm bewegbar ist und das Schrauben des Stabes (5) in die Hülse (4) hinein oder aus ihr heraus eine Änderung der Länge der Rohrleitung (2) bewirkt, dadurch gekennzeichnet, daß das Außengewinde des Stabes (5) mit mindestens einer Abflachung ausgebildet ist, die sich axial entlang der äußeren Oberfläche des mit dem Gewinde versehenen Teils des Stabes erstreckt und daß ein Verriegelungsglied (6) unverdrehbar mit der Hülse (4) verbunden ist, wobei das Verriegelungsglied in eine Position und aus ihr heraus bewegbar ist, in der es am abgeflachten Abschnitt des mit Gewinde versehenen Stabes derart angreift, daß der Stab gegenüber einer Verdrehung relativ zur Hülse verriegelt ist.

2. Bowdenzug nach Anspruch 1, bei welchem, wenn die Verriegelung (6) aus ihrer an dem abgeflachten Abschnitt des Stabes (5) angreifenden Verriegelungsposition herausbewegt ist, der Stab relativ zur Hülse (4) nach innen oder außen verdreht werden kann zur Einstellung der effektiven Länge der Rohrleitung (2).

3. Bowdenzug nach Anspruch 1 oder 2, bei welchem die Einstellvorrichtung (3) in Kabelmitte, d.h. zwischen zwei Längen oder Abschnitten (2a und 2b) der äußeren Rohrleitung, die sich zwischen den beiden End-Widerlagern erstreckt, angeordnet ist.

4. Bowdenzug nach Anspruch 3, bei welchem die Hülse (4) mit einer Länge bzw. einem Abschnitt (2b) der besagten Rohrleitung verbunden und unverdrehbar an ihr befestigt ist und der Stab (5) über eine Drehverbindung (15) drehbar an der zweiten Länge bzw. dem zweiten Abschnitt (2a) der Rohrleitung befestigt ist.

5. Bowdenzug nach Anspruch 1, bei welchem die Einstellvorrichtung an einem Ende der Rohrleitung des Bowdenzuges angeordnet ist, wobei die Hülse mit einem der End-Widerlager verbunden und unverdrehbar an ihm befestigt ist und der Stab mit einem Ende der Rohrleitung drehbar verbunden ist.

6. Bowdenzug nach einem der vorhergehenden Ansprüche, bei welchem der Stab (5) und die Hülse (4) mit ihrer integralen Verriegelung (6) als Kunststoff-Formteile ausgebildet sind.

7. Bowdenzug nach Anspruch 6, bei welchem diese Formteile Endanschlußstücke aufweisen, welche die Enden von Abschnitten der äußeren Rohrleitung des Bowdenzugs aufnehmen können oder an denen sie durch Einpressen oder in anderer Weise befestigt sind.

8. Bowdenzug nach einem der vorhergehenden Ansprüche, bei welchem die Verriegelung (6) mit der Hülse (4) über einen integralen, ein Biegegelenk darstellenden Streifen (17) verbunden ist.

9. Bowdenzug nach einem der vorhergehenden Ansprüche, bei welchem der Gewindeteil des Stabes (5) einen viereckigen Querschnitt besitzt mit vier Abflachungen, von denen jede axial entlang seines Gewindeabschnittes verläuft, und die Verriegelung (6), wenn sie den Stab umfaßt, an drei der vier Abflachungen im Preßsitz angreift und den Gewindeteil des Stabes (5) übergreift.

## Revendications

1. Dispositif de commande par câble du type Bowden comportant un câble formant noyau interne (1) mobile axialement à l'intérieur d'un conduit externe (2), le conduit externe étant adapté de manière à s'étendre entre deux butées d'extrémité fixes, et le dispositif de commande comportant un dispositif de réglage (3) grâce auquel la longueur efficace du conduit externe, entre lesdites butées d'extrémités, peut être réglée, et dans lequel le dispositif de réglage comprend essentiellement une tige creuse filetée à l'extérieur (5) qui peut être vissée dans un fourreau creux fileté à l'intérieur (4) et dévissée par rapport à ce dernier, ladite tige et ledit fourreau représentant une partie de la longueur dudit conduit s'étendant entre lesdites butées d'extrémité, et le câble formant noyau passant à travers et étant mobile à la fois à l'intérieur dudit fourreau et de ladite tige, le vissage de la tige (5) à l'intérieur du fourreau (4) ou le dévissage permettant de modifier la longueur du conduit (2); caractérisé en ce que le filetage externe de la tige (5) comporte au moins un plat s'étendant axialement le long de la surface externe de la partie filetée de la tige, et dans lequel un élément de verrouillage (6) est relié au fourreau (4) de manière à ne pas pouvoir tourner, l'élément de verrouillage étant mobile vers une position dans laquelle il porte sur la partie aplatie de la tige filetée de manière à bloquer la tige en rotation par rapport au fourreau, l'élément pouvant être ramené de cette position.

2. Dispositif de commande selon la revendication 1, dans lequel, lorsque le verrou (6) est retiré de sa position de verrouillage au contact de la partie aplatie de la tige (5), la tige peut être tournée par rapport au fourreau (4), dans un sens ou l'autre, afin de régler la longueur effective du conduit (2).

3. Dispositif de commande selon l'une ou l'autre des revendications 1 ou 2, dans lequel le dispositif de réglage (3) est situé au milieu du câble, c'est-à-dire, entre deux segments ou sections (2a et 2b) du conduit externe s'étendant entre les deux butées d'extrémité.

4. Dispositif de commande selon la revendication 3, dans lequel le fourreau (4) est connecté, et non fixé en rotation, sur un segment ou section (2b) dudit conduit, et ladite tige (5) est fixée, de manière à pouvoir tourner, par un joint tournant (15) sur le second segment ou section de conduit (2a).

5. Dispositif de commande selon la revendication 1, dans lequel le dispositif de réglage est situé à une extrémité du conduit du dispositif de commande par câble du type Bowden, le fourreau étant connecté, et non fixé en rotation, à l'une des butées d'extrémité, et la tige étant connectée en rotation au conduit, à une extrémité de celui-ci.

6. Dispositif de commande selon l'une quelconque des revendications précédentes, dans lequel la tige (5) et le fourreau (4) intégrant le verrou (6) sont des pièces moulées en plastique.

7. Dispositif de commande selon la revendication 6, dans lequel de telles pièces moulées comportent des raccords d'extrémités qui peuvent recevoir les extrémités des sections de conduit externe du dispositif de commande par câble du type Bowden, ou être sertis ou fixés d'une autre manière sur ces dernières.

8. Dispositif de commande selon l'une quelconque des revendications précédentes, dans lequel le verrou (6) est relié au fourreau (4) par une bande intégrée (17) constituant une articulation à flexion.

9. Dispositif de commande selon l'une quelconque des revendications précédentes, dans lequel la partie filetée de la tige (5) présente une section transversale carrée, avec quatre plats s'étendant chacun axialement le long de sa partie filetée; et lorqu'il entoure la tige, le verrou (6) se bloque sur trois des quatre plats, en constituant un assemblage sous pression et pinçant de la partie filetée de la tige (5).
